Europäisches Patentamt

European Patent Office

Office européen des brevets

(11) Publication number: **0 078 782**
**B1**

(12) **EUROPEAN PATENT SPECIFICATION**

(45) Date of publication of patent specification: **28.08.85**

(21) Application number: **82850217.9**

(22) Date of filing: **01.11.82**

(51) Int. Cl.⁴: **A 23 J 1/12, A 23 L 1/10, A 23 L 1/31, A 21 D 13/06**

(54) **Method for producing foodstuffs from whole cereal grains.**

(30) Priority: **04.11.81 SE 8106527**

(43) Date of publication of application:
**11.05.83 Bulletin 83/19**

(45) Publication of the grant of the patent:
**28.08.85 Bulletin 85/35**

(84) Designated Contracting States:
**AT BE CH DE FR GB IT LI LU NL SE**

(56) References cited:
**FR-A-2 406 665**
**GB-A-1 244 288**
**NL-A- 279 192**

(73) Proprietor: **Maskin AB Plavia**
**Scheelegatan 1**
**S-112 23 Stockholm (SE)**

(72) Inventor: **Conrad, Ernst**
**Espegarden Gredeby 5**
**S-370 24 Nättraby (SE)**

(74) Representative: **Inger, Lars Ulf Bosson**
**L + U INGER Patentbyra HB Garvaregatan 12**
**S-262 00 Ängelholm (SE)**

Courier Press, Leamington Spa, England.

# 0 078 782

**Description**

Technical field

The present invention relates to a method for producing foodstuffs from whole cereal grain, and more particularly to a heat-technical wet processing method, where primarily the proteins of the respective cereal grain is so treated that its original nutritional value, related to the protein, is maintained intact for human consumption.

Background of the invention

Heat-technical wet processing of whole cereal grain is previously known and is used i.a. in the processing of beer. Thereby the enzymes (amylases) present in the grain after malting, or bacterial enzymes (α-amylases) are used. After an exhaustive enzymatic saccharification of the starch content of the grain, as e.g. wheat, rye, oat, barley, maize (corn), rice, sorghum, etc. deactivation is carried out by a rapid boiling followed by a separation of husks (bran) and precipitated proteins. The time periods necessary for carrying out these processes are, however, so long that excessively denatured protein is obtained, which can not be used for anything else but animal feedstuffs.

The reason why the protein value is degraded in such a wet processing method is very complicated, but is primarily dependent on the formation of certain sugar-protein-compounds, which are digested by the human body with difficulty. Such proteins are primarily of the glucoprotein type.

It is also known that such glucoproteins are formed from the respective protein only if sufficient free glucose molecules are available. Bound glucose molecules, such as dextrines, and oligosaccharides, do not react with the proteins.

Normal saccharification of the starch content of the grain is always carried out in an aqueous slurry of the grain in the presence of suitable enzymes and the addition of heat. The grains of the slurry are heated by the water, either indirectly through heat exchange or directly by means of so called jet boiling, which is often carried out in two steps.

None of these methods give, however, a satisfactory impact to the grains—rapid hydrolyzation of the starch granules present and a rapid, subsequent deactivation of the enzyme added—to prevent the formation of undesired free glucose.

Prior art also discloses a method for producing a grain sirup where the whole content of the protein is present in the final product, (SE 7808870-5, see also FR—A—2406665). However, in certain cases said presence of protein is undesired, and it is thus necessary to remove the protein.

Disclosure of the present invention

It has now surprisingly been shown technically possible to reduce the formation of free glucose almost completely, while converting the contents of the grain to form starch derivatives and undissolved proteins. The method is thereby characterized in that simultaneously with the dosage of the enzymes used the grain is added in dry form directly to the water, which is at a temperature such that the starch of the grain is converted only to soluble dextrins and oligosaccharides prior to the deactivation of the enzyme. The protein present in the grain is set free and is thereby suspended in the hydrolysate, and any formation of sugar-protein compounds is eliminated.

Further characteristics of the invention will be apparent from the accompanying claims.

The slurry obtained, which contains husks (bran), pentosans, starch hydrolysate, and released protein, is subjected to a further sterilization which deactivates substantially all the soil bacteria which may be present and gives any undissolved components of the slurry, such as husks, pentosans, and protein a more solid consistency at the subsequent separation. Such a solid consistency is not desired, due to filtration properties, which are then reduced.

This sterilization is preferably carried out using a so called UHT-method (ultra high temperature) for 2 seconds at 140°C, and a subsequent cooling *in vacuo* to about 75°C prior to the separation. The method is known to be used in the heat treatment of milk to give long-term storability.

It has not previously been used in this context, but has surprisingly been shown to give a total protection against protein destruction, which is shown by the absence of Maillard compounds.

The separation of solid and dissolved phases, respectively, is carried out in a way known *per se*, using suction filtration, centrifugation by means of a decanter, pressure, etc.

The solid phase, e.g. the filter cake, contains primarily a minor part of the liquid phase, the sirup. This sirup is easily removed by washing with water, and recycled to the process as starting water.

The liquid phase of starch hydrolysate contains a minor part of nonprecipitated proteins, such as water-soluble albumins, normally present in an amount of 1 percent of the grain.

These soluble proteins can, if so desired, be removed completely by a so called ultra filtration. Ultra filtration is used industrially to recover a protein concentrate from whey in accordance with the WPC-method.

It has not previously been used in this context.

The present method will be described in detail with reference to the Examples given below.

2

Example 1. Continuous process

Wheat grain was rolled or ground to a degree depending on the final, solid end product desired, generally 0.5—3 mm. The grain thus crushed was fed continuously to a vessel containing water at 95°C, simultaneously as enzymes were added in an amount related to the amount of the wheat crush added. The amount of water was adjusted to 3 parts of water per 1 part of wheat. The slurry obtained was pumped off continuously, with the simultaneous addition of fresh water, enzymes, and wheat crush. The enzyme used was BAN 120L by Novo, Copenhagen, Denmark, and was added in an amount of 0.5 g per kilo of crush.

The slurry pumped off was transferred to a UHT-sterilization unit, followed by separation of solid and liquid phases with a subsequent washing of the solid phase to a clean product, which was dried to a so called wheat meat (bran-gluten). The liquid phase, the starch hydrolysate, was transferred to an ultra filtration process. The liquid freed from all proteins can then be saccharified further to give a starch sirup comprising dextrose and/or isomerose sugars, after a further enzymatic treatment using amyloglucosidase and/or isomerase. The protein fraction obtained by ultra filtration in the form of a concentrate was added to the solid phase while this was being dried in a manner known *per se*.

Yield:

Starting material, wheat: 100 g of wheat=66 g of starch
11 g of proteins, 1 g of which is watersoluble
20 g of bran
2 g of minerals
1 g of fat
___
100 g

Water soluble phase: 67.5 g of dry matter=66 g of starch
1.5 g of minerals
___
67.5 g

Solid phase: 32.5 g of dry matter=20 g of bran and pentosans
11 g of proteins
0.5 g of minerals
1.0 g of fat
___
32.5 g

Example 2

Sorghum grains were treated in accordance with Example 1. Thereby the grain was crushed to the desired particle size before being added to the water and enzyme.

Yield:

Starting material, sorghum: 100 g of grain=66.3 g of starch
11.0 g of proteins, of which 0.5 g is watersoluble
22 g of bran and pentosans
0.5 g of fat
0.2 g of minerals
___
100.0 g

Water soluble phase: 66.4 g of dry matter=66.3 g of starch
0.1 g of minerals

Solid phase: 33.6 g of dry matter=22 g of bran and pentosans
11 g of proteins
0.6 g of fat and minerals
___
33.6 g

The solid phase obtained from Example 1 and Example 2 above produced a meat like structure when, after having been dried, it was mixed with water in an amount of 2 parts of water per 1 part of dry solid substance. It has a protein content of about 35% by weight.

The product showed to be a very suitable meat replacement product to swine and beef meat in minced meat products, such as sausages, paté, hamburgers, meat balls, etc.

3

**0 078 782**

Example 3. Preparation of sausage

Standard recipe: Meat part: 4 kg of swine meat
2 kg of beef meat
_____
6 kg

Example: sausage recipe: 3 kg of swine meat
3 kg of wheat and sorghum meat (50:50)
1.2 kg of boiled potatoes
1.5 kg of lard
0.1 kg of fat free milk
q.s. of salt and spices
_____
8.8 kg mixture to be filled into skins.

3 kg of grain meat per 8.8 kg of readily prepared mixture makes 34% by weight.

Example 4. Preparation of onion sausage

Standard recipe: Meat part: 7 kg of swine meat
_____
7 kg

Example: sausage recipe: 3 kg of coarsely ground swine meat
4 kg of wheat/sorghum meat
1 kg of lard in pieces
_____
8 kg

Onion and other ingredients were added to the meat part in accordance with the original recipe. The sausages thus prepared were smoked for one day at 45°C. Taste, flavor, and general appearance were in accordance with the originals.

Example 5. Meat balls

425 g of minced swine meat
225 g of wheat meat (75 g of dry product, 150 g of water)
20 g of milk powder
70 g of boiled potatoes
40 g of egg
70 g of chopped onion
q.s. of salt and spices
_____
850 g of mixture to be formed to meat balls and fried.

The meat balls contained 26.5% by weight of wheat meat. The meat balls were fried in the same way as standard meat balls. The meat balls obtained containing wheat meat, however, gave a better colour upon frying and a smaller frying loss depending on the water binding fibres derived from the bran present in the wheat meat.

The solid phase obtained by the process according to the invention from wheat, as well as sorghum, had prior to the washing out of the remaining sirup, a content of such residual sirup as follows:

Yield:

Starting material: 100 g of crushed wheat
Liquid phase: 52.5 g of sirup dry matter=51 g of starch derivatives
1.5 g of minerals

Solid phase: 47.5 g of dry matter=20 g of bran
11 g of proteins
0.5 g of minerals
16 g of sirup

After drying, the solid phase has been shown to be suitable as an additive to bread as it adds valuable fibres, corresponding to that amount present in so called "whole grain bread", (11%) as well as increasing the total protein content to about 8% compared to 5.7% in standard bread, which is an increase of about 40%. The following comparative recipes are given:

4

Example 6

| Standard bread: | Water | 135 g | |
| | Yeast | 8 g | |
| | Sugar sirup | 5 g | |
| | Salt | 2 g | |
| | Wheat flour | 200 g | |
| | Dough | 350 g | comprising fibres 0 g proteins 20 g (5.7%) |
| Improved bread: | Water | 135 g | |
| | Yeast | 8 g | |
| | Salt | 2 g | |
| | Wheat meat | 55 g | (=fibres 23 g, proteins 13 g, sirup 18 g, minerals 1 g) |
| | Wheat flour | 150 g | |
| | Dough | 350 g | comprising fibres 23 g proteins 28 g |

The bread is fermented and baked in the same way as any standard bread. The "wheat meat" bread gives, however, a better baking depending on the sugar content (maltose) and a better storability, i.e. stays fresher after one day at open storage depending on the water binding capacity of the fibres.

The solid phase obtained by the present process and after having been washed is free from any residual sirup. It has a protein content of about 35% by weight after having been dried. Both swine and beef meat have a similar protein content. The product has been shown to be suitable as a replacement product both for swine and beef meat, and can replace up to 50% of such meat. Hereby the animal fat content is reduced in the final product, and the amino acid composition becomes improved from a nutritional point of view. Further valuable fibres are added to the meat product made therefrom. The total price of the final product will decrease as well, as vegetable protein is cheaper than animal protein.

BAN 120L sold by Novo has been used in the Example above. However, any α-amylase can be used to decompose the starch content of the grain, such as Thermamyl, which is a high-temperature resistant α-amylase. Thereby the processing temperature can be elevated, and has to be in order to deactivate the enzyme.

In the Examples above a continuous process has been shown. It is, however, evident to any skilled in the art that the process can be carried out in a batch-wise procedure.

Example 7

After having isolated the liquid phase in the primary step, i.e. the first hydrolyzation of the starch to dextrines and oligosaccharides, and avoiding the formation of glucose, the liquid phase is further hydrolyzed using amyloglucosidase. Thereby 0.2 g of "Optidex-L" were added per 1000 g of grain added to the original aqueous slurry. The temperature was lowered to 60°C prior to the addition of the enzyme. After 24 hrs. at this temperature 98% of the starch present had been converted to pure glucose. The enzymatic treatment was carried out at a pH of 4.5. The pH was then increased to about 6.0 by means of sodium carbonate, and from 6.0 to 7.0 by means of an addition of magnesium hydroxide. 1.5 g of a fructose forming isomerose forming enzyme "Optisweet P" were added and the temperature was kept at 60°C for another 24 hrs. with automatic adjustment of the pH to 7.0 by the addition of sodium carbonate. After this period 48% of the original glucose present had been converted into fructose. After isomerization the pH was adjusted to 6.0 by means of citric acid, whereupon the aqueous phase was concentrated to a sirup containing 98% of the original starch content, and only 10% of the original protein content, i.e. the sirup contained about 1% by weight of protein.

**Claims**

1. A method for the production of foodstuff components in the form of a liquid saccharide portion, and a solids residue portion, respectively from whole cereal grain, whereby the grain is treated with an α-amylase while being slurried in an aqueous phase to solubilize the starch content of the grain, characterized in that the grain is added to the aqueous phase simultaneously with the enzyme used, whereby the grain is added in dry form directly to the aqueous phase, which is at a temperature such that the starch content of the grain is converted only into soluble dextrins and oligosaccharides before the enzyme becomes deactivated by the heat, thereby preventing formation of the substantial amounts of glucose, thereby preventing the formation of sugar-protein-compounds, whereupon the starch derivatives, and the solid residues of the grain content, respectively, are each separated and isolated.

2. A method according to claim 1, characterized in that the solid phase of the aqueous slurry obtained is further sterilized by ultra high temperature sterilization of said slurry.

# 0 078 782

3. A method according to claim 1, characterized in that any soluble protein of the grain, which proteins have been set free by the initial enzyme treatment, is separated off from the aqueous phase by means of ultra filtration after separation of any solids.

4. A method according to claim 1, characterized in that the temperature of the aqueous phase is at least 90°C, preferably 95—100°C.

5. A method according to claim 1, characterized in that the solid phase obtained comprising bran, protein, and minor amounts of minerals, and fat is recovered as a meat replacement product, which is dried prior to its use.

6. A method according to claim 1, characterized in that the liquid phase obtained after separation off of the solid phase is further treated to decompose the starch derivatives to give a starch syrup, dextrose, and/or isomerose.

## Patentansprüche

1. Verfahren zur Herstellung von Nahrungsmitteln in der Form eines flüssigen Saccharidanteils bzw. eines Feststoffrückstandanteils aus Vollgetreidekorn, wobei das Korn mit einer α-Amylase behandelt wird, während es in einer wäßrigen PHase aufgeschlämmt ist, um den Stärkegehalt des Kornes löslich zu machen, dadurch gekennzeichnet, daß das Korn zu der wäßrigen Phase gleichzeitig mit dem verwendeten Enzym zugesetzt wird, wobei das Korn in trokkener Form direkt zu der wäßrigen Phase zugesetzt wird, die sich auf einer solchen Temperatur befindet, daß der Stärkegehalt des Kornes nur zu löslichen Dextrinen und Oligosacchariden umgewandelt wird, bevor das Enzym durch die Wärme deaktiviert wird, wodurch die Bildung wesentlicher Glucosemengen verhindert wird und dadurch die Bildung von Zucker-Protein-Verbindungen verhindert wird, worauf die Stärkederivate bzw. die festen Reste des Korngehaltes jeweils abgetrennt und isoliert werden.

2. Verfahren nach Anspruch 1, dadurch gekennzeichnet, daß die feste Phase des erhaltenen wäßrigen Schlammes zusätzlich durch Ultrahochtemperatursterilisierung des Schlammes sterilisiert wird.

3. Verfahren nach Anspruch 1, dadurch gekennzeichnet, daß lösliches Protein des Kornes, das durch die anfängliche Enzymbehandlung freigesetzt wurde, von der wäßrigen Phase durch Ultrafiltration nach Abtrennung von Feststoffen abgetrennt wird.

4. Verfahren nach Anspruch 1, dadurch gekennzeichnet, daß die Temperatur der wäßrigen Phase wenigstens 90°C, vorzugsweise 95 bis 100°C ist.

5. Verfahren nach Anspruch 1, dadurch gekennzeichnet, daß die erhaltene feste Phase, die Kleie, Protein und kleinere Mengen an Mineralien enthält, und Fett als ein Fleischersatzprodukt gewonnen wird, das vor seiner Verwendung getrocknet wird.

6. Verfahren nach Anspruch 1, dadurch gekennzeichnet, daß die erhaltene flüssige Phase nach der Abtrennung der festen Phase zusätzlich behandelt wird, um die Stärkederivate zuzusetzen und so einen Stärkesirup, Dextrose und/oder Isomerose zu ergeben.

## Revendications

1. Procédé de fabrication de composants alimentaires sous forme d'une partie de saccharide liquide et d'une partie de reste de matières solides, au départ de grains entiers de céréales, par lequel les grains sont traités avec une α-analyse tout en étant transformés en pâte dans une phase aqueuse pour solubiliser la teneur en amidon des grains, caractérisé en ce que les grains sont ajoutés à la phase aqueuse en même temps que l'enzyme utilisée, les grains étant ajoutés sous forme sèche directement à la phase aqueuse, qui se trouve à une température telle que la teneur en amidon des grains n'est convertie qu'en oligosaccharides et en dextrines solubles avant que l'enzyme soit désactivée par la chaleur, en empêchant de la sorte la formation de quantités importantes de glucose et en empêchant la formation de composés de sucre-protéine, puis les dérivés d'amidon et les restes solides de la teneur en grains sont séparés les uns des autres et isolés.

2. Procédé suivant la revendication 1, caractérisé en ce que la phase solide de la pâte aqueuse obtenue est stérilisée par une stérilisation à très haute température de cette pâte.

3. Procédé suivant la revendication 1, caractérisé en ce que toute protéine soluble des grains, qui a été rendue libre par le traitement enzymatique initial, est séparée de la phase aqueuse grâce à une ultrafiltration après séparation des matières solides quelconques.

4. Procédé suivant la revendication 1, caractérisé en ce que la température de la phase aqueuse est d'au moins 90°C, de préférence de 95—100°C.

5. Procédé suivant la revendication 1, caractérisé en ce que la phase solide obtenue, comprenant du son, des protéines, et de petites quantités de minéraux, ainsi que de la graisse, est récupérée à titre de succédané de viande, que l'on sèche avant son utilisation.

6. Procédé suivant la revendication 1, caractérisé en ce que la phase liquide obtenue après séparation de la phase solide est encore traitée pour décomposer les dérivés d'amidon en vue d'obtenir un sirop d'amidon, du dextrose et/ou de l'isomérose.